(19)

**Europäisches Patentamt**
**European Patent Office**
**Office européen des brevets**

(11) **EP 4 661 467 A1**

(12) **EUROPEAN PATENT APPLICATION**
published in accordance with Art. 153(4) EPC

(43) Date of publication:
**10.12.2025 Bulletin 2025/50**

(21) Application number: **24755819.0**

(22) Date of filing: **02.01.2024**

(51) International Patent Classification (IPC):
*H04W 24/02* (2009.01)

(52) Cooperative Patent Classification (CPC):
**H04L 5/00; H04W 24/02; H04W 24/10; H04W 64/00**

(86) International application number:
**PCT/CN2024/070126**

(87) International publication number:
**WO 2024/169443 (22.08.2024 Gazette 2024/34)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **15.02.2023 CN 202310151960**

(71) Applicant: **Huawei Technologies Co., Ltd.
Shenzhen, Guangdong 518129 (CN)**

(72) Inventors:
• **ZHANG, Li
Shenzhen, Guangdong 518129 (CN)**

• **HUANG, Su
Shenzhen, Guangdong 518129 (CN)**
• **HAN, Jing
Shenzhen, Guangdong 518129 (CN)**
• **LI, Hong
Shenzhen, Guangdong 518129 (CN)**
• **SHEN, Zhongyi
Shenzhen, Guangdong 518129 (CN)**

(74) Representative: **Goddar, Heinz J.
Boehmert & Boehmert
Anwaltspartnerschaft mbB
Pettenkoferstrasse 22
80336 München (DE)**

(54) **METHOD AND APPARATUS FOR POSITIONING REFERENCE SIGNAL (PRS) AGGREGATION AND MEASUREMENT**

(57) Embodiments of this application provide a method for performing aggregated measurement on a positioning reference signal PRS and an apparatus. The method includes: A terminal device receives configuration information sent by a location management device, determines PRS resources having an association relationship in each PRS frequency layer combination based on information about at least one PRS frequency layer combination, performs aggregated measurement on the PRS resources having the association relationship to obtain a measurement result, and reports the measurement result to the location management device, where each PRS frequency layer combination includes at least two PRS frequency layers participating in aggregation. According to the foregoing solution, positioning accuracy of the terminal device can be improved.

```
┌─────────────────────────────────┐
│ A terminal device receives      │
│ configuration information sent   │ ～ S410
│ by a location management device, │
│ where the configuration         │
│ information indicates at least   │
│ two PRS frequency layers         │
│ participating in aggregation     │
└─────────────────────────────────┘
              │
┌─────────────────────────────────┐
│ The terminal device determines,  │
│ based on information about at     │ ～ S420
│ least one PRS frequency layer     │
│ combination, PRS resources        │
│ having an association             │
│ relationship in each PRS          │
│ frequency layer combination       │
└─────────────────────────────────┘
              │
┌─────────────────────────────────┐
│ The terminal device performs      │
│ aggregated measurement on the     │ ～ S430
│ PRS resources having the          │
│ association relationship, to      │
│ obtain a measurement result       │
└─────────────────────────────────┘
              │
┌─────────────────────────────────┐
│ The terminal device sends the     │
│ measurement result to the         │ ～ S440
│ location management device        │
└─────────────────────────────────┘
```

FIG. 4

## Description

This application claims priority to Chinese Patent Application No. 202310151960.7, filed on February 15, 2023 and entitled "METHOD FOR PERFORMING AGGREGATED MEASUREMENT ON POSITIONING REFERENCE SIGNAL PRS AND APPARATUS", which is incorporated herein by reference in its entirety.

## TECHNICAL FIELD

Embodiments of this application relate to the field of positioning technologies, and more specifically, to a method for performing aggregated measurement on a positioning reference signal PRS and an apparatus.

## BACKGROUND

In a mobile communication system, terminal device positioning is one of important functions. A current positioning technology includes a downlink positioning technology. The downlink positioning technology means that an access network device sends a downlink reference signal to a terminal device. The downlink reference signal may be a positioning reference signal (positioning reference signal, PRS). The terminal device measures the downlink reference signal, and sends a measurement result to a location management device, so that the location management device determines positioning information of the terminal device based on the measurement result.

Currently, in a low-frequency communication system, positioning precision of the positioning technology is not high, and it is difficult to achieve high precision. A main reason is that a maximum bandwidth of a single PRS in the low-frequency communication system is 100 MHz, and precision of a positioning method based on timing ranging is directly related to the bandwidth. Usually, a larger PRS bandwidth indicates higher ranging precision. Therefore, how to improve positioning precision with a small change being made to an existing PRS configuration is an urgent problem to be resolved currently.

## SUMMARY

Embodiments of this application provide a method for performing aggregated measurement on a positioning reference signal PRS and an apparatus, to improve positioning precision of a terminal device with an existing PRS configuration being slightly modified.

According to a first aspect, a method for performing aggregated measurement on a positioning reference signal PRS is provided. The method may be performed by a terminal device, or may be performed by a chip or a circuit configured in the terminal device. This is not limited in this application.

The method includes: The terminal device receives configuration information sent by a location management device, determines PRS resources having an association relationship in each PRS frequency layer combination based on information about at least one PRS frequency layer combination, performs aggregated measurement on the PRS resources having the association relationship to obtain a measurement result, and reports the measurement result to the location management device, where the configuration information includes the information about the at least one PRS frequency layer combination, and each PRS frequency layer combination includes at least two PRS frequency layers participating in aggregation.

According to the foregoing solution, the location management device sends the information about at least one PRS frequency layer combination to the terminal device, and the terminal device may determine, based on the information about the at least one PRS frequency layer combination, the PRS resources having the association relationship in each PRS frequency layer combination, perform aggregated measurement on the PRS resources having the association relationship, and report the measurement result to the location management device. Because information indicating PRS frequency layer aggregation in the foregoing solution may be independent of assistance information, the location management device may use cell-level assistance information. For the terminal device supporting the PRS frequency layer aggregation, frequency layer aggregation information is additionally indicated. In this way, the PRS frequency layer aggregation is implemented with an existing PRS configuration being slightly modified, a measurement bandwidth of the PRS is equivalently increased, which means that a signal bandwidth is increased, to implement higher measurement precision and positioning precision.

With reference to the first aspect, in some implementations of the first aspect, the configuration information includes identifications IDs or indexes indexes of the at least two PRS frequency layers participating in aggregation in each PRS frequency layer combination.

With reference to the first aspect, in some implementations of the first aspect, the at least one PRS frequency layer combination includes a first PRS frequency layer combination, where the first PRS frequency layer combination includes n PRS frequency layers, and n is a positive integer greater than or equal to 2. The terminal device determines that n PRS resources respectively corresponding to the n PRS frequency layers have an association relationship, where information about TRPs corresponding to the n PRS resources is the same, information about resource sets corresponding to the n PRS resources is the same, and resource information of the n PRS resources is the same. The information about the TRP includes an ID or an index of the TRP or a result of performing a modulo operation on the ID of the TRP using a quantity of TRPs on a PRS frequency layer, the information about the resource set includes an ID or an index of the resource set or a result of performing a modulo operation on the ID of the resource set using a quantity of resource sets, and the resource information includes IDs or indexes of the PRS resources.

With reference to the first aspect, in some implementations of the first aspect, the configuration information further includes quantities of transmission reception points TRPs on the at least two PRS frequency layers participating in aggregation in each PRS frequency layer combination, and an ID or an index of a start TRP of each PRS frequency layer.

With reference to the first aspect, in some implementations of the first aspect, the at least one PRS frequency layer combination includes a first PRS frequency layer combination, where the first PRS frequency layer combination includes n PRS frequency layers, and n is a positive integer greater than or equal to 2. The terminal device determines that n PRS resources respectively corresponding to the n PRS frequency layers have an association relationship, where information about TRPs corresponding to the n PRS resources is the same, information about resource sets corresponding to the n PRS resources is the same, and resource information of the n PRS resources is the same. The information about the TRP includes an ID or an index of the TRP or a difference between the ID or the index of the TRP and the ID or the index of the start TRP, the information about the resource set includes an ID or an index of the resource set or a result of performing a modulo operation on the ID of the resource set using a quantity of resource sets, and the resource information includes IDs or indexes of the PRS resources.

With reference to the first aspect, in some implementations of the first aspect, the configuration information further includes a PRS configuration table. The PRS configuration table includes one or more of the following lists: a list of TRPs participating in aggregation on each PRS frequency layer in each PRS frequency layer combination, a list of resource sets participating in aggregation under each TRP, and a list of PRS resources participating in aggregation in each resource set.

With reference to the first aspect, in some implementations of the first aspect, the at least one PRS frequency layer combination includes a first PRS frequency layer combination, where the first PRS frequency layer combination includes n PRS frequency layers, and n is a positive integer greater than or equal to 2. The terminal device determines that n PRS resources respectively corresponding to the n PRS frequency layers have an association relationship, where indexes of TRPs corresponding to the n PRS resources are the same, indexes of resource sets corresponding to the n PRS resources are the same, and indexes of the n PRS resources are the same.

With reference to the first aspect, in some implementations of the first aspect, each PRS frequency layer combination meets the following conditions: the at least two PRS frequency layers included in each PRS frequency layer combination have a same quantity of TRPs, a same TRP on each PRS frequency layer has a same quantity of resource sets, and each resource set has a same quantity of PRS resources.

With reference to the first aspect, in some implementations of the first aspect, the terminal device performs aggregated measurement on the PRS resources having the association relationship in each PRS frequency layer combination, to obtain a measurement result corresponding to each PRS frequency layer combination.

With reference to the first aspect, in some implementations of the first aspect, the measurement result reported by the terminal device to the location management device includes the measurement result corresponding to each PRS frequency layer combination, and the measurement result corresponding to each PRS frequency layer combination further includes an ID or an index of the PRS frequency layer combination corresponding to each measurement result.

According to the foregoing solution, the terminal device includes the ID or the index of the PRS frequency layer combination corresponding to the measurement result in reporting of the measurement result, so that the location management device can learn of the PRS frequency layer combination corresponding to the measurement result. For a measurement result obtained through measuring a group of resources having an association relationship, the terminal device may select to associate a TRP ID, a resource set ID, and a resource ID that correspond to any resource. The location management device may learn, by using the ID or the index of the PRS frequency layer combination, that the measurement result is a result of performing aggregated measurement on the group of resources having the association relationship. In the foregoing solution, an aggregated resource set list and an aggregated resource list are not added to the result reporting, and signaling design is simplified.

With reference to the first aspect, in some implementations of the first aspect, measurement time of the measurement result reported by the terminal device to the location management device is a sum of time for the terminal device to measure the PRS resources having the association relationship in each PRS frequency layer combination and time for the terminal device to measure a PRS resource having no association relationship on a single PRS frequency layer.

According to the foregoing solution, the terminal considers different PRS frequency layer combinations, including a single PRS frequency layer, as generalized PRS frequency layers for measurement, and defines measurement time of a plurality of generalized PRS frequency layers in a manner of summation, which allows serial measurement of the terminal, and simplifies implementation of the terminal.

According to a second aspect, a method for performing aggregated measurement on a positioning reference signal PRS is provided. The method may be performed by a location management device, or may be performed by a chip or a circuit configured in the location management device. This is not limited in this application.

The method includes: The location management device sends configuration information to a terminal device, where the configuration information includes information about at least one PRS frequency layer combination, and each PRS frequency layer combination includes at least two PRS frequency layers participating in aggregation. The location management device receives a measurement result sent by the terminal device, where the measurement result is a result of measuring, by the terminal device, PRS resources having an association relationship in the at least one PRS frequency layer combination.

With reference to the second aspect, in some implementations of the second aspect, the configuration information includes identifications IDs or indexes indexes of the at least two PRS frequency layers participating in aggregation in each PRS frequency layer combination.

With reference to the second aspect, in some implementations of the second aspect, the configuration information further includes quantities of transmission reception points TRPs on the at least two PRS frequency layers participating in aggregation in each PRS frequency layer combination, and an ID or an index of a start TRP of each PRS frequency layer.

With reference to the second aspect, in some implementations of the second aspect, the configuration information further includes a PRS configuration table. The PRS configuration table includes one or more of the following lists: a list of TRPs participating in aggregation on each PRS frequency layer in each PRS frequency layer combination, a list of resource sets participating in aggregation under each TRP, and a list of PRS resources participating in aggregation in each resource set.

With reference to the second aspect, in some implementations of the second aspect, the measurement result includes a measurement result corresponding to each PRS frequency layer combination, and the measurement result corresponding to each PRS frequency layer combination further includes an ID or an index of the PRS frequency layer combination corresponding to each measurement result.

With reference to the second aspect, in some implementations of the second aspect, each PRS frequency layer combination meets the following conditions: the at least two PRS frequency layers included in each PRS frequency layer combination have a same quantity of TRPs, a same TRP on each PRS frequency layer has a same quantity of resource sets, and each resource set has a same quantity of PRS resources.

According to a third aspect, a method for performing aggregated measurement on a positioning reference signal PRS is provided. The method includes: A terminal device measures PRS resources having an association relationship in each PRS frequency layer combination and a PRS resource having no association relationship in a single PRS frequency layer, and reports a measurement result to a location management device. Measurement time of the measurement result reported by the terminal device to the location management device is a sum of time for the terminal device to measure the PRS resources having the association relationship in each PRS frequency layer combination and time for the terminal device to measure the PRS resource having no association relationship on the single PRS frequency layer.

According to a fourth aspect, a communication apparatus is provided. The communication apparatus has a function of implementing the method in any one of the first aspect or the possible implementations of the first aspect. The function may be implemented by hardware, or may be implemented by hardware executing corresponding software. The hardware or the software includes one or more units corresponding to the function.

According to a fifth aspect, a communication apparatus is provided. The communication apparatus has a function of implementing the method in any one of the second aspect or the possible implementations of the second aspect. The function may be implemented by hardware, or may be implemented by hardware executing corresponding software. The hardware or the software includes one or more units corresponding to the function.

According to a sixth aspect, a communication apparatus is provided. The communication apparatus has a function of implementing the method in the third aspect. The function may be implemented by hardware, or may be implemented by hardware executing corresponding software. The hardware or the software includes one or more units corresponding to the function.

According to a seventh aspect, a communication apparatus is provided, and includes a processor and a memory. Optionally, the communication apparatus may further include a transceiver. The memory is configured to store a computer program, and the processor is configured to: invoke and run the computer program stored in the memory, and control the transceiver to receive and send a signal, to cause the communication apparatus to perform the method in any one of the first aspect or the possible implementations of the first aspect.

For example, the communication apparatus is a terminal device.

According to an eighth aspect, a communication apparatus is provided, and includes a processor and a memory. Optionally, the communication apparatus may further include a transceiver. The memory is configured to store a computer program, and the processor is configured to: invoke and run the computer program stored in the memory, and control the transceiver to receive and send a signal, to cause the communication apparatus to perform the method in any one of the second aspect or the possible implementations of the second aspect.

For example, the communication apparatus is a location management device.

According to a ninth aspect, a communication apparatus is provided, and includes a processor and a memory. Optionally, the communication apparatus may further include a transceiver. The memory is configured to store a computer program, and the processor is configured to: invoke and run the computer program stored in the memory, and control the transceiver to receive and send a signal, to cause the communication apparatus to perform the method in the third aspect.

For example, the communication apparatus is a terminal device.

According to a tenth aspect, a computer-readable storage medium is provided. The computer-readable storage medium stores computer instructions. When the computer instructions are run on a computer, the method in any one of the possible implementations of the first aspect is performed.

According to an eleventh aspect, a computer-readable storage medium is provided. The computer-readable storage medium stores computer instructions. When the computer instructions are run on a computer, the method in any one of the possible implementations of the second aspect is performed.

According to a twelfth aspect, a computer-readable storage medium is provided. The computer-readable storage medium stores computer instructions. When the computer instructions are run on a computer, the method in the third aspect is performed.

According to a thirteenth aspect, a computer program product is provided. The computer program product includes instructions, and when the instructions are run by a processor, the method in any one of the possible implementations of the first aspect is performed.

According to a fourteenth aspect, a computer program product is provided. The computer program product includes instructions, and when the instructions are run by a processor, the method in any one of the possible implementations of the second aspect is performed.

According to a fifteenth aspect, a computer program product is provided. The computer program product includes instructions, and when the instructions are run by a processor, the method in the third aspect is performed.

According to a sixteenth aspect, a chip is provided, and includes one or more processing circuits, where the one or more processing circuits are configured to implement the method in any one of the possible implementations of the first aspect.

According to a seventeenth aspect, a chip is provided, and includes one or more processing circuits, where the one or more processing circuits are configured to implement the method in any one of the possible implementations of the second aspect.

According to an eighteenth aspect, a chip is provided, and includes one or more processing circuits, where the one or more processing circuits are configured to implement the method in the third aspect.

According to a nineteenth aspect, a wireless communication system is provided, and includes the communication apparatus in the fourth aspect or the seventh aspect, the communication apparatus in the fifth aspect or the eighth aspect, and the communication apparatus in the sixth aspect or the ninth aspect.

## BRIEF DESCRIPTION OF DRAWINGS

FIG. 1 is a diagram of a system architecture according to an embodiment of this application;
FIG. 2 is a diagram of another system architecture according to an embodiment of this application;
FIG. 3 is a diagram of a PRS configuration table according to an embodiment of this application;
FIG. 4 is a schematic flowchart of a method for performing aggregated measurement on a positioning reference signal PRS according to an embodiment of this application;
FIG. 5 is a block diagram of a communication apparatus according to an embodiment of this application;
FIG. 6 is a diagram of another structure of a communication apparatus according to an embodiment of this application; and
FIG. 7 is a diagram of another structure of a communication apparatus according to an embodiment of this application.

## DESCRIPTION OF EMBODIMENTS

The following describes technical solutions of this application with reference to accompanying drawings.

In the specification, claims, or accompanying drawings of this application, the terms "first", "second", and the like are intended only to distinguish between different objects, but are not used to describe a specific sequence. In addition, the terms "including" and "having" and any other variants thereof are intended to cover a non-exclusive inclusion. For example, a process, a method, a system, a product, or a device that includes a series of operations or units is not limited to the listed operations or units, but optionally further includes an unlisted operation or unit, or optionally further includes another inherent operation or unit of the process, the method, the product, or the device.

An "embodiment" mentioned below indicates that a particular feature, structure, or characteristic described with reference to this embodiment may be included in at least one embodiment of this application. The phrase shown in various locations in the specification may not necessarily refer to a same embodiment, and is not an independent or optional embodiment exclusive from another embodiment. It is explicitly and implicitly understood by a person skilled in the art that embodiments described in the specification may be combined with another embodiment.

In this application, "at least one (item)" means one or more, "a plurality of" means two or more, "at least two (items)" means two, three, or more, and "and/or" is used to describe a correspondence relationship between corresponding objects, and indicates that there may be three relationships. For example, "A and/or B" may indicate the following three cases: Only A exists, only B exists, and both A and B exist, where A and B may be singular or plural. The character "/" usually represents an "or" relationship between corresponding objects. "At least one item (piece) of the following" or a similar expression thereof means any combination of these items, including a singular item (piece) or any combination of plural items (pieces). For example, at least one (piece) of a, b, or c may represent: a, b, c, "a and b", "a and c", "b and c", or "a, b, and c", where a, b, and c may be singular or plural.

In this application, "identification, ID, Identity" is an attribute for describing an object, and "index, index" is a location or a sequence of the object in a list.

For ease of description, the following describes a system architecture in embodiments of this application in detail.

The technical solutions in embodiments of this application may be applied to various communication systems, for example, a global system for mobile communications (Global System of Mobile communications, GSM), a code division multiple access (Code Division Multiple Access, CDMA) system, a wideband code division multiple access (Wideband Code Division Multiple Access, WCDMA) system, a general packet radio service (General Packet Radio Service, GPRS), a long term evolution (Long Term Evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, and a 5th generation (5th Generation, 5G) mobile communication system or new radio (new radio, NR). The 5G mobile communication system may be non-standalone (non-standalone, NSA) networking or standalone (standalone, SA) networking.

The technical solutions provided in this application may be further applied to machine-type communication (machine-type communication, MTC), long term evolution-machine (long term evolution-machine, LTE-M), a device-to-device (device-to-device, D2D) network, a machine-to-machine (machine-to-machine, M2M) network, an internet of things (internet of things, IoT) network, or another network. The IoT network may include, for example, an internet of vehicles. Communication manners in the internet of vehicles system are collectively referred to as a vehicle to X device (vehicle to X, V2X, and X can represent anything). For example, the V2X may include: vehicle to vehicle (vehicle to vehicle, V2V) communication, vehicle to infrastructure (vehicle to infrastructure, V2I) communication, vehicle to pedestrian communication (vehicle to vehicle, V2P), vehicle to network (vehicle to network, V2N) communication, or the like.

The technical solutions provided in this application may be further applied to a future communication system, for example, a 6th generation (6th Generation, 6G) mobile communication system. This is not limited in this application.

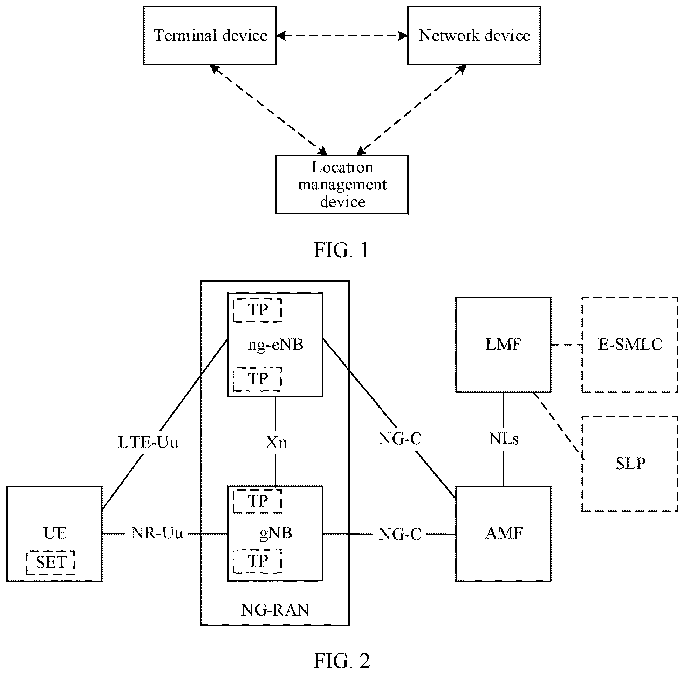

FIG. 1 is a diagram of a system architecture according to an embodiment of this application. As shown in FIG. 1, the system architecture includes a terminal device, a network device, and a location management device.

The terminal device involved in embodiments of this application is an entity that is on a user side and that is configured to receive or transmit a signal. The terminal device may be a device that provides voice and/or data connectivity for a user, for example, a handheld device or a vehicle-mounted device with a wireless connection function. The terminal device may also be another processing device connected to a wireless modem. The terminal device may communicate with a radio access network (radio access network, RAN).

In embodiments of this application, the terminal device may also be referred to as user equipment (user equipment, UE), an access terminal, a subscriber unit, a subscriber station, a mobile station, a remote station, a remote terminal, a mobile device, a user terminal, a terminal, a wireless communication device, a user agent, a user apparatus, or the like.

The terminal device may be a device that provides voice/data connectivity for a user, for example, a handheld device or a vehicle-mounted device with a wireless connection function. Currently, some examples of the terminal may be a mobile phone (mobile phone), a tablet computer (pad), a computer (for example, a notebook computer or a palmtop computer) with a wireless transceiver function, a mobile internet device (mobile internet device, MID), a virtual reality (virtual reality, VR) device, an augmented reality (augmented reality, AR) device, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal (for example, a home appliance like a television, a smart box, or a game console) in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device, another processing device connected to a wireless modem, a vehicle-mounted device, a wearable device, a terminal device in a 5G network, or a terminal device in a future evolved public land mobile network (public land mobile network, PLMN).

The wearable device may also be referred to as a wearable intelligent device, and is a general term of wearable devices, such as glasses, gloves, watches, clothes, and shoes, that are developed by applying wearable technologies to intelligent designs of daily wear. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement complete or partial functions without depending on smartphones, for example, smart watches or smart glasses, and devices that dedicated to only one type of application function and need to work with other devices such as smartphones, for example, various smart bands or smart jewelry for monitoring physical signs.

In addition, the terminal device may alternatively be a terminal device in an internet of things (Internet of things, IoT) system. IoT is an important part in future development of information technologies. A main technical feature of the IoT is to connect things to a network by using a communication technology, to implement an intelligent network for human-machine interconnection and thing-thing interconnection. In an IoT technology, massive connections, deep coverage, and power saving of a terminal may be implemented by using, for example, a narrowband (narrowband, NB) technology.

In embodiments of this application, the terminal device may alternatively be a vehicle or an entire vehicle, and may implement communication via the internet of vehicles, or may be a component located in the vehicle (for example, placed in the vehicle or installed in the vehicle), that is, an on-board terminal device, an on-board module, or an on-board unit (on-board unit, OBU).

In addition, the terminal device may alternatively include a sensor such as an intelligent printer, a train detector, or a gas station. Main functions include collecting data (some terminal devices), receiving control information and downlink data from a network device, sending an electromagnetic wave, and transmitting uplink data to the network device.

In this application, an apparatus configured to implement a function of the terminal device may be the terminal device, or may be an apparatus that can support the terminal device in implementing the function, for example, a chip system, a hardware circuit, a software module, or a combination of a hardware circuit and a software module. The apparatus may be installed in the terminal device or may be used together with the terminal device. In the technical solutions provided in this disclosure, an example in which the apparatus configured to implement the function of the terminal device is the terminal device and the terminal device is UE is used to describe the technical solutions provided in this disclosure.

The network device in embodiments of this application is an entity that is on a network side that is configured to transmit or receive a signal, and may be configured to mutually convert a received over-the-air frame and an internet protocol (internet protocol, IP) packet, and serve as a router between the terminal device and a remaining part of the access network, where the remaining part of the access network may include an IP network.

In embodiments of this application, the network device may be any device with a wireless transceiver function. The device includes, but is not limited to: an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, home evolved NodeB, or home NodeB, HNB), a baseband unit (baseband unit, BBU), an access point (access point, AP), a wireless relay node, a wireless backhaul node, a transmission point (transmission point, TP), a transmission reception point (transmission reception point, TRP), or the like in a wireless fidelity (wireless fidelity, Wi-Fi) system. Alternatively, the device may be a gNB or a transmission point (TRP or TP) in a 5G such as NR, system, one or one group of antenna panels (including a plurality of antenna panels) in a base station in the 5G system. Alternatively, the device may be a network node that constitutes a gNB or a transmission point, for example, a baseband unit (BBU), a distributed unit (distributed unit, DU), or a base station in a next generation 6G communication system.

In some deployments, the gNB may include a central unit (central unit, CU) and the DU. The gNB may further include an active antenna unit (active antenna unit, AAU). The CU implements a part of functions of the gNB, and the DU implements a part of functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a medium access control (medium access control, MAC) layer, and a physical (physical, PHY) layer. The AAU implements a part of physical layer processing functions, radio frequency layer processing, and a function related to an active antenna. The information at the RRC layer is finally changed into information at the PHY layer, or is changed from the information at the PHY layer. Therefore, in this architecture, higher layer signaling such as RRC layer signaling may also be considered to be sent by the DU, or by the DU and the CU. It may be understood that the network device may be a device including one or more of a CU node, a DU node, and an AAU node. In addition, the CU may be classified into a network device in an access network (radio access network, RAN), or the CU may be classified into a network device in a core network (core network, CN). This is not limited in this application.

The network device provides a service for a cell, and a terminal device uses a transmission resource (for example, a frequency domain resource, or a spectrum resource) allocated by the network device to communicate with the cell. The cell may belong to a macro base station (for example, a macro eNB or a macro gNB), or may belong to a base station corresponding to a small cell (small cell). The small cell herein may include: a metro cell (metro cell), a micro cell (micro cell), a pico cell (pico cell), a femto cell (femto cell), or the like. These small cells have characteristics of small coverage and low transmit power, and are applicable to providing a high-speed data transmission service.

In this application, an apparatus configured to implement a function of the access network device may be the access network device, or may be an apparatus that can support the access network device in implementing the function, for example, a chip system, a hardware circuit, a software module, or a combination of a hardware circuit and a software module. The apparatus may be installed in the access network device or may be used together with the access network device. In the technical solutions provided in this application, an example in which the apparatus configured to implement the function of the access network device is the access network device and the access network device is a base station is used to describe the technical solutions provided in this application.

In this embodiment of this application, one network device may include one or more cells, and each cell includes one or more transmission reception points (transmission reception point, TRP) or transmission points (transmission point, TP).

The location management device is a device used by the network side to determine positioning information of the terminal device. The location management device may be a location management function (location management function, LMF) entity, an evolved serving mobile location center (evolved serving mobile location center, E-SMLC), or another device that can be used to determine the positioning information of the terminal device.

In a possible implementation, the system architecture shown in FIG. 1 may further include another device. For example, FIG. 2 is a diagram of another system architecture. In FIG. 2, an example in which a terminal device is UE, a network device includes an ng-eNB and a gNB, and a location management device is an LMF is used. As shown in FIG. 2, the system architecture may further include an access management function (access management function, AMF) entity. The AMF entity is a control plane network function provided by an operator network, and is responsible for access control and mobility management for accessing the operator network by the terminal device, for example, including functions such as mobility status management, temporary user identity assignment, and user authentication and authorization. Optionally, the system architecture may further include a user plane location platform (SUPL location platform, SLP) and an enhanced serving mobile location center (enhanced serving mobile location center, E-SMLC) entity. In embodiments of this application, only a network device that is closely related to the positioning information determining method proposed in this application is described. Details of another related network device are not described.

Rel-16 positioning standardizes a downlink positioning reference signal (downlink positioning reference signal, DL PRS) to support the following positioning technologies.

1. Downlink time difference of arrival (DL-time difference of arrival, DL-TDOA) positioning technology: In the positioning technology, a terminal device measures a downlink reference signal time difference of arrival (downlink reference signal time difference, DL RSTD) for a positioning reference signal (positioning reference signal, PRS) sent from each cell, and reports a measurement result to an LMF. The LMF positions the terminal device based on the measurement result.

2. Downlink angle of departure (DL-AoD) positioning technology: In the positioning technology, a terminal device measures a reference signal received power (reference signal received power, RSRP) of a PRS sent from each cell, and reports a measurement result to an LMF. The LMF positions the terminal device based on the measurement result.

3. Multi-round trip time (multi-round trip time, Multi-RTT) positioning technology: In the positioning technology, a terminal device measures a user equipment reception-transmission time difference (UE Rx-Tx time difference) of a PRS sent from each cell, and reports a measurement result to an LMF. Each cell measures a gNB reception-transmission time difference (gNB Rx-Tx time difference) of an SRS sent by the terminal device, and reports a measurement result to the LMF. The LMF positions the terminal device based on the measurement results.

The following describes concepts related to a PRS configuration.

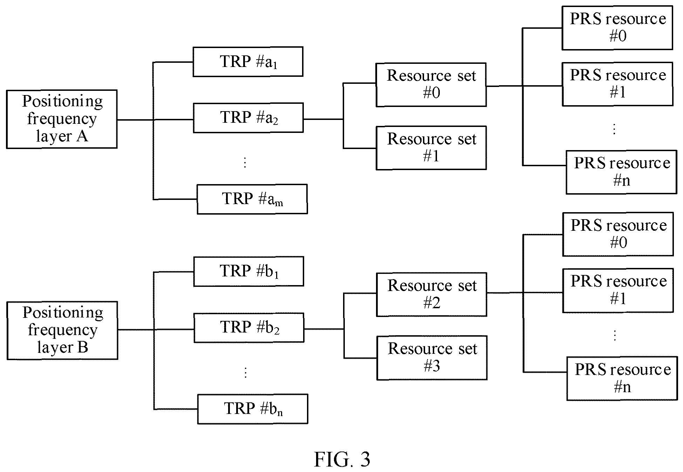

1. Positioning frequency layer (positioning frequency layer, PFL): As shown in FIG. 3, each positioning frequency layer is a set of a plurality of positioning reference signal (positioning reference signal, PRS) resource sets on a plurality of TRPs, and belongs to one or more TRPs. PRS resources on one positioning frequency layer have a same A point (a start location of a common resource block), bandwidth, subcarrier spacing, and quantity of combs.

2. TRP: One TRP corresponds to one sending point at an independent location. As shown in FIG. 3, one TRP may include one or more PRS resource sets. One positioning frequency layer has one or more TRPs, and one TRP may also send a PRS on one or more positioning frequency layers.

3. PRS resource set: As shown in FIG. 3, one PRS resource set includes one or more PRS resources, and PRS resources in one PRS resource set have a same periodicity, a same quantity of symbols, and the like. Different TRPs have different PRS resource sets. One TRP has different resource sets on different PRS frequency layers, and one TRP may also have a plurality of different resource sets on one PRS frequency layer.

4. PRS resource: A PRS resource is a minimum granularity of PRS configuration and one PRS resource corresponds to one PRS transmit beam.

Currently, in a low-frequency communication system, positioning precision of a positioning technology is not high, and it is difficult to achieve high precision at a level of 0.2 meters. A main reason is that a maximum bandwidth of a single PRS in a low-frequency NR communication system is 100 MHz, and precision of a positioning method based on timing ranging is directly related to the bandwidth. Usually, a larger PRS bandwidth indicates higher ranging precision. Therefore, how to improve positioning precision is an urgent problem to be resolved currently.

Embodiments of this application provide a method for performing aggregated measurement on a positioning reference signal PRS, so that PRS frequency layer aggregation is implemented with an existing PRS configuration being slightly modified, a measurement bandwidth of the PRS is equivalently increased, which means that a signal bandwidth is increased, to implement higher measurement precision and positioning precision.

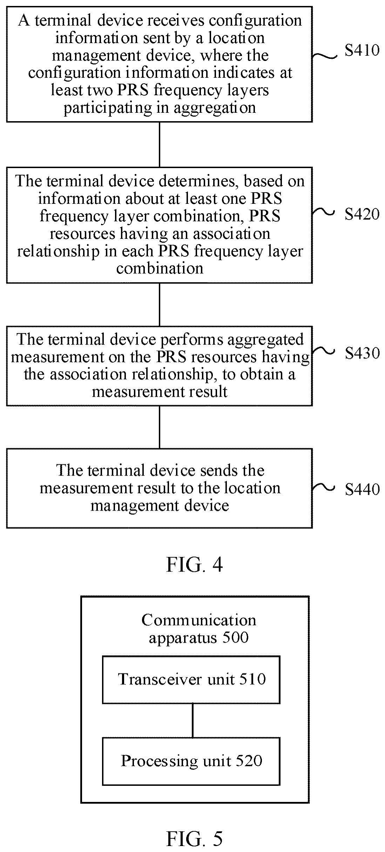

With reference to FIG. 4, the following describes in detail a method for performing aggregated measurement on a positioning reference signal PRS according to an embodiment of this application.

FIG. 4 is a schematic flowchart of a method for performing aggregated measurement on a positioning reference signal PRS according to an embodiment of this application. As shown in FIG. 4, the method may include steps 410 to 440. The following describes steps 410 to 440 in detail.

Step 410: A terminal device receives configuration information sent by a location management device, where the configuration information indicates at least two PRS frequency layers participating in aggregation.

The configuration information is not specifically limited in this embodiment of this application. In an example, the configuration information may be, for example, PRS assistance information or measurement request information sent by the location management device to the terminal device.

In this embodiment of this application, the location management device may send the configuration information to the terminal device, where the configuration information may indicate the at least two PRS frequency layers participating in aggregation. There are a plurality of specific implementations. The following describes several possible implementations by using examples.

In a possible implementation (Manner 1 for short), the configuration information that may be sent by the location management device to the terminal device includes information about at least one PRS frequency layer combination, and each PRS frequency layer combination includes the at least two PRS frequency layers participating in aggregation. In other words, each PRS frequency layer combination includes a list of the at least two PRS frequency layers participating in aggregation.

The information about the at least one PRS frequency layer combination is not specifically limited. In an example, the information about the at least one PRS frequency layer combination is an identification (identification, ID) or an index (index) of the at least one PRS frequency layer combination, and the information further includes identifications IDs or indexes indexes of the at least two PRS frequency layers participating in aggregation in the PRS frequency layer combination.

In another possible implementation (Manner 2 for short), in addition to the information about the at least one PRS frequency layer combination in Manner 1, the configuration information that may be sent by the location management device to the terminal device may further include quantities of TRPs on the at least two PRS frequency layers participating in aggregation in each PRS frequency layer combination and information about a start TRP of each PRS frequency layer.

The information about the start TRP may be an ID of the start TRP or an index of the start TRP. The ID or the index of the start TRP may be configured for each frequency layer combination, and in this case, IDs or indexes of start TRPs of PRS frequency layers in the combination are the same; or may be separately configured for each PRS frequency layer, and in this case, IDs or indexes of start TRPs of PRS frequency layers in the combination may be different. This is not specifically limited in this embodiment of this application.

In another possible implementation (Manner 3 for short), in addition to the information about the at least one PRS frequency layer combination, the configuration information that may be sent by the location management device to the terminal device may further include a first PRS configuration table. The first PRS configuration table includes one or more of the following: a list of TRPs participating in aggregation on each PRS frequency layer in each PRS frequency layer combination, a list of resource sets participating in aggregation under each TRP, and a list of PRS resources participating in aggregation in each resource set.

The first PRS configuration table may be a PRS configuration table sent by the location management device to the terminal device, that is, the first PRS configuration table may be a PRS configuration table customized based on an aggregation capability or a location of the terminal device. Information in the first PRS configuration table may be all or a part of a second PRS configuration table (a PRS universal set configuration table sent by the location management device to the terminal device, for example, nr-DL-PRS-AssistanceDataList-r16 in the existing 3GPP TS 37.355 protocol).

Optionally, if the first PRS configuration table does not include a list of TRPs participating in aggregation on a specific PRS frequency layer, the first PRS configuration table includes all TRPs on the PRS frequency layer in the second PRS configuration table and sorted in a sequence same as that in the second PRS configuration table (If this field is absent, all DL-PRS Resources of all TRPs of the indicated frequency layer are addressed). If the first PRS configuration table does not include a list of resource sets participating in aggregation under a specific TRP, the first PRS configuration table includes all resource sets under the TRP on a PRS frequency layer in the second PRS configuration table and sorted in a sequence same as that in the second PRS configuration table (If this field is absent, all DL-PRS Resource Sets and Resources of the indicated TRP are addressed). If the first PRS configuration table does not include a list of PRS resources participating in aggregation in a specific resource set, the first PRS configuration table includes all resources in the resource set under a TRP on a PRS frequency layer in the second PRS configuration table and sorted in same sequences (If this field is absent, all DL-PRS Resources of the indicated DL-PRS Resource Set are addressed).

Optionally, for any one of the foregoing Manner 1 to Manner 3, a configuration of a PRS frequency layer combination needs to meet the following conditions: at least two PRS frequency layers included in each PRS frequency layer combination have a same quantity of TRPs, a same TRP on each PRS frequency layer has a same quantity of resource sets, and each resource set has a same quantity of PRS resources.

Step 420: The terminal device determines, based on the information about the at least one PRS frequency layer combination, PRS resources having an association relationship in each PRS frequency layer combination.

In this embodiment of this application, after receiving the information about the at least one PRS frequency layer combination, the terminal device may determine, based on the information about the at least one PRS frequency layer combination, the PRS resources having the association relationship in each PRS frequency layer combination.

In an example, the configuration information shown in the foregoing Manner 1 is used as an example. If a specific PRS frequency layer combination includes n PRS frequency layers, the terminal device may determine, based on the following conditions, that n PRS resources respectively corresponding to the n PRS frequency layers have an association relationship: information about TRPs corresponding to the n PRS resources is the same, information about resource sets corresponding to the n PRS resources is the same, and resource information of the n PRS resources is the same.

The information about the TRP includes an ID or an index of the TRP or a result of performing a modulo operation on the ID of the TRP using a quantity of TRPs on a PRS frequency layer, the information about the resource set includes an ID or an index of the resource set or a result of performing a modulo operation on the ID of the resource set using a quantity of resource sets, and the resource information includes IDs or indexes of the PRS resources.

In another example, the configuration information shown in the foregoing Manner 2 is used as an example. If a specific PRS frequency layer combination includes n PRS frequency layers, the terminal device may determine, based on the following conditions, that n PRS resources respectively corresponding to the n PRS frequency layers have an association relationship: information about TRPs corresponding to the n PRS resources is the same, information about resource sets corresponding to the n PRS resources is the same, and resource information of the n PRS resources is the same.

The information about the TRP includes an ID or an index of the TRP or a difference between the ID or the index of the TRP and the ID or the index of the start TRP, the information about the resource set includes an ID or an index of the resource set or a result of performing a modulo operation on the ID of the resource set using a quantity of resource sets, and the resource information includes IDs or indexes of the PRS resources.

It should be understood that, in the configuration information of the foregoing Manner 1 and the configuration information of the foregoing Manner 2, the index of the TRP may be an index (or a location) of the TRP in the second PRS configuration table, the index of the resource set may be an index (or a location) of the resource set in the second PRS configuration table, and the index of the resource may be an index (or a location) of the resource in the second PRS configuration table.

In another example, the configuration information shown in the foregoing Manner 3 is used as an example. If a specific PRS frequency layer combination includes n PRS frequency layers, the terminal device may determine, based on the following conditions, that n PRS resources respectively corresponding to the n PRS frequency layers have an association relationship: indexes of TRPs corresponding to the n PRS resources are the same, indexes of resource sets corresponding to the n PRS resources are the same, and indexes of the n PRS resources are the same. It should be understood that a frequency layer A may also be referred to as a positioning frequency layer A or a PRS frequency layer A, and a frequency layer B may also be referred to as a positioning frequency layer B or a PRS frequency layer B. This is not specifically limited in this application.

In a possible implementation, it is assumed that the first PRS configuration table includes a list of TRPs participating in aggregation on each PRS frequency layer in each PRS frequency layer combination, a list of resource sets participating in aggregation under each TRP, and a list of PRS resources participating in aggregation in each resource set. In this implementation, that the indexes of the TRPs corresponding to the n PRS resources are the same may be understood as that indexes of the TRPs corresponding to the n PRS resources in the first PRS configuration table are the same, that the indexes of the resource sets corresponding to the n PRS resources are the same may be understood as that indexes of the resource sets corresponding to the n PRS resources in the first PRS configuration table are the same, and that the indexes of the n PRS resources are the same may be understood as that the indexes of the n PRS resources in the first PRS configuration table are the same.

In another possible implementation, it is assumed that the first PRS configuration table does not include a list of TRPs participating in aggregation on a specific PRS frequency layer. In an example, the list of TRPs participating in aggregation on the PRS frequency layer may be generated in the first PRS configuration table based on a list of TRPs participating in aggregation on the PRS frequency layer in the second PRS configuration table. In this example, that the indexes of the TRPs corresponding to the n PRS resources are the same may be understood as that indexes of the TRPs, corresponding to the n PRS resources, in the first PRS configuration table are the same. In another example, a list of TRPs participating in aggregation on the PRS frequency layer in the second PRS configuration table may alternatively be referenced. In this example, that the indexes of the TRPs corresponding to the n PRS resources are the same may be understood as that indexes of the TRPs, corresponding to the n PRS resources, in the second PRS configuration table are the same.

Similarly, in another possible implementation, it is assumed that the first PRS configuration table does not include a list of resource sets participating in aggregation under a TRP. In an example, the list of resource sets participating in aggregation under the TRP may be generated in the first PRS configuration table based on a list of resource sets participating in aggregation under the TRP in the second PRS configuration table. In this example, that the indexes of the resource sets corresponding to the n PRS resources are the same may be understood as that indexes of the resource sets corresponding to the n PRS resources in the first PRS configuration table are the same. In another example, a list of resource sets participating in aggregation under the TRP in the second PRS configuration table may alternatively be referenced. In this example, that the indexes of the resource sets corresponding to the n PRS resources are the same may be understood as that indexes of the resource sets corresponding to the n PRS resources in the second PRS configuration table are the same.

Similarly, in another possible implementation, it is assumed that the first PRS configuration table does not include a list of PRS resources participating in aggregation in a specific resource set. In an example, a list of PRS resources participating in aggregation in the resource set may be generated in the first PRS configuration table based on a list of PRS resources participating in aggregation in the resource set in the second PRS configuration table. In this example, that the indexes of the n PRS resources are the same may be understood as that indexes of the n PRS resources in the first PRS configuration table are the same. In another example, a list of PRS resources participating in aggregation in the resource set in the second PRS configuration table may alternatively be referenced. In this example, that the indexes of the n PRS resources are the same may be understood as that indexes of the n PRS resources in the second PRS configuration table are the same.

The n PRS resources having the association relationship that are determined in the foregoing manners may be understood as a resource combination in the PRS frequency layer combination. Based on the quantity of TRPs in the information about the PRS frequency layer combination, the quantity of resource sets under each TRP, and the quantity of resources in each resource set, the terminal device may determine a plurality of resource combinations in one PRS frequency layer combination, where each resource combination includes n resources having an association relationship.

For example, the following describes in detail a specific implementation of determining, by the terminal device, the PRS resources having the association relationship in the PRS frequency layer combination by using the configuration information shown in Manner 1 and FIG. 3 as the second PRS configuration table as an example.

It is assumed that the configuration information includes information about a first PRS frequency layer combination, and the first PRS frequency layer combination includes a frequency layer A and a frequency layer B. Assuming that a quantity of TRPs, a quantity of resource sets under each TRP, and a quantity of resources in each resource set on the PRS frequency layer A are the same as those on the PRS frequency layer B in FIG. 3, Quantity of PRS resource combinations that can be for aggregating on the two frequency layers (A and B) in the PRS configuration table shown in FIG. 3 = Quantity of TRPs on the frequency layer $\times$ Quantity of resource sets under each TRP $\times$ Quantity of PRS resources in each resource set.

As shown in FIG. 3, in an example, the terminal device may determine, based on the following three conditions, that there is an association relationship between a PRS resource #0 in a resource set #0 under a TRP #$a_2$ on the frequency layer A and a PRS resource #0 in a resource set #2 under a TRP #$b_2$ on the frequency layer B, and aggregated measurement may be performed.

1. IDs of the TRP #$a_2$ on the frequency layer A and the TRP #$b_2$ on the frequency layer B are the same, or indexes in the second PRS configuration table are the same, or a result of performing a modulo operation on the ID of the TRP #$a_2$ using a quantity of TRPs on the frequency layer A is the same as a result of performing a modulo operation on the ID of the TRP #$b_2$ using a quantity of TRPs on the frequency layer B.

2. IDs of the resource set #0 under the TRP #$a_2$ and the resource set #2 under the TRP #$b_2$ are the same, or indexes of the resource set #0 and the resource set #2 in the second PRS configuration table are the same, or results of performing a modulo operation on the indexes or the IDs of the resource sets using quantities of resource sets are the same, or a result of performing a modulo operation on the ID of the resource set #0 using a quantity of resource sets under the TRP #$a_2$ is the same as a result of performing a modulo operation on the ID of the resource set #2 using a quantity of resource sets under the TRP #$b_2$.

3. IDs of the PRS resource #0 in the resource set #0 and the PRS resource #0 in the resource set #2 are the same, or indexes in the second PRS configuration table are the same.

Step 430: The terminal device performs aggregated measurement on the PRS resources having the association relationship, to obtain a measurement result.

After determining the PRS resources having the association relationship in each PRS frequency layer combination, the terminal device may perform aggregated measurement on the PRS resources having the association relationship. A measurement result is obtained based on each resource combination, and the result corresponds to the PRS frequency layer combination.

Optionally, in some embodiments, if one PRS frequency layer combination includes only one PRS frequency layer, one measurement result is generated for each resource on the PRS frequency layer, and the result corresponds to the PRS frequency layer combination.

In other words, the terminal device may generate a measurement result for one PRS frequency layer combination, and the PRS frequency layer combination may include one PRS frequency layer, or may include at least two PRS frequency layers.

Time for the terminal device to obtain measurement results includes a sum of time for the terminal device to measure each PRS frequency layer combination. In other words, it is assumed that in the at least one PRS frequency layer combination sent by the location management device to the terminal device, there are both a PRS frequency layer combination including one PRS frequency layer and a PRS frequency layer combination including at least two PRS frequency layers, and the time for the terminal device to obtain the measurement results is a sum of time for the terminal device to measure the PRS resources having the association relationship in each PRS frequency layer combination and time for the terminal device to measure a PRS resource having no association relationship on the single PRS frequency layer.

For example, the location management device sends information about two PRS frequency layer combinations to the terminal device. One frequency layer combination includes two PRS frequency layers A and B, and the other frequency layer combination includes the PRS frequency layer A. Measurement time of the terminal device is a sum of time for measuring the PRS frequency layer combination A and B and time for measuring the PRS frequency layer A.

In other words, the terminal device may consider different PRS frequency layer combinations as different generalized PFLs, and measurement time is a sum of measurement time of all generalized PFLs, that is, the terminal device measures all PFL combinations in serial.

The terminal considers different PRS frequency layer combinations (including a single PRS frequency layer) as generalized PRS frequency layers for measurement, and defines measurement time of a plurality of generalized PRS frequency layers in a manner of summation, which allows serial measurement of the terminal device, and simplifies implementation of the terminal device.

For example, the following is a possible calculation of measurement time of the measurement result reported by the terminal device to the location management device.

$$T_{PRS,\text{Total}} = \sum_{i=1}^{L} T_{PRS,i} + (L-1) * \max(T_{\text{effect},i})$$

$T_{PRS,\text{Total}}$ is total time for the terminal device to measure a plurality of PRS frequency layer combinations, $T_{PRS,i}$ is time for the terminal device to measure an ith frequency layer combination, and L is a quantity of PRS frequency layer combinations, including a frequency layer combination including a plurality of PRS frequency layers and a frequency layer combination including a single PRS frequency layer; or it may be understood as that L is a sum of a quantity of PRS frequency layer combinations and a quantity of single PRS frequency layers, where each PRS frequency layer combination includes a plurality of PRS frequency layers. $T_{effect,i}$ is a valid measurement gap of the $i^{th}$ PRS frequency layer combination. It should be understood that, because n resources in each resource combination have a same time domain position, measurement time of each PRS frequency layer combination may be determined in a same manner of determining measurement time of the single PRS frequency layer, but it needs to be considered that a processing capability of the terminal device for the PRS frequency layer combination may be different from a processing capability for the single PRS frequency layer.

Step 440: The terminal device sends the measurement result to the location management device.

In this embodiment of this application, the terminal device may perform aggregated measurement on the PRS resources having the association relationship, and report the measurement result to the location management device after obtaining the measurement result, so that the location management device positions the terminal device based on the measurement result reported by the terminal device.

In an example, the measurement result reported by the terminal device to the location management device includes a measurement result corresponding to each PRS frequency layer combination. Optionally, in some embodiments, the measurement result corresponding to each PRS frequency layer combination further includes information (for example, an ID or an index of the PRS frequency layer combination) about the PRS frequency layer combination corresponding to each measurement result. In this way, after receiving the measurement result corresponding to each PRS frequency layer combination, the location management device may further determine that the measurement result is results of measuring PRS resources having an association relationship in specific PRS frequency layer combinations by the terminal device.

For example, a measurement result corresponding to a specific PRS frequency layer combination includes: information (for example, an ID or an index of the PRS frequency layer combination) about the PRS frequency layer combination, and a TRP ID, a resource set ID, and a resource ID of a PRS resource combination for which the measurement result is generated. The TRP ID may be a TRP ID, a resource set ID, or a resource ID corresponding to any resource in the PRS resource combination for which the measurement result is generated, or may be understood as any one of IDs of a TRP corresponding to the measurement result on different PRS frequency layers, the resource set ID may be any one of IDs of a resource set corresponding to the measurement result on different PRS frequency layers, and the resource ID is any one of IDs of a resource corresponding to the measurement result in the resource set.

According to the foregoing solution, the location management device sends the information about at least one PRS frequency layer combination to the terminal device, and the terminal device may determine, based on the information about the at least one PRS frequency layer combination, the PRS resources having the association relationship in each PRS frequency layer combination, perform aggregated measurement on the PRS resources having the association relationship, and report the measurement result to the location management device. In this way, PRS frequency layer aggregation is implemented with an existing PRS configuration being slightly modified, a measurement bandwidth of the PRS is equivalently increased, which means that a signal bandwidth is increased, to implement higher measurement precision and positioning precision.

The foregoing describes in detail the technical solutions provided in the method for performing aggregated measurement on a PRS in embodiments of this application with reference to FIG. 1 to FIG. 4. The following describes communication apparatuses provided in embodiments of this application with reference to FIG. 5 to FIG. 7.

FIG. 5 is a block diagram of a communication apparatus according to an embodiment of this application. As shown in FIG. 5, an apparatus 500 may include a transceiver unit 510 and a processing unit 520. The transceiver unit 510 may communicate with the outside. For example, the transceiver unit 510 may input externally received data/information to the processing unit. For another example, the transceiver unit 510 may output data/information processed by the processing unit to the outside. The transceiver unit 510 may also be referred to as a communication interface or a communication unit. The processing unit 520 is configured to process data/information, so that a function of the terminal device in the method shown in FIG. 4 is implemented, or a function of the location management device in the method shown in FIG. 4 is implemented.

In a possible implementation, the apparatus 500 may be the terminal device in the method shown in FIG. 4, or may be a chip configured to implement a function of the terminal device in the method shown in FIG. 4. Specifically, the apparatus 500 may implement a procedure performed by the terminal device in the method shown in FIG. 4. The transceiver unit 510 and the processing unit 520 are configured to perform processing-related operations of the terminal device in the foregoing method procedure.

The transceiver unit 510 is configured to receive configuration information sent by a location management device, and report a measurement result to the location management device, where the configuration information includes information about at least one PRS frequency layer combination, and each PRS frequency layer combination includes at least two PRS frequency layers participating in aggregation.

The processing unit 520 is configured to determine PRS resources having an association relationship in each PRS frequency layer combination based on the information about the at least one PRS frequency layer combination, and perform aggregated measurement on the PRS resources having the association relationship to obtain a measurement result.

Optionally, the configuration information includes identifications ID or indexes indexes of the at least two PRS frequency layers participating in aggregation in each PRS frequency layer combination.

Optionally, the at least one PRS frequency layer combination includes a first PRS frequency layer combination, where the first PRS frequency layer combination includes n PRS frequency layers, and n is a positive integer greater than or equal to 2. The processing unit 520 is specifically configured to determine that n PRS resources respectively corresponding to the n PRS frequency layers have an association relationship, where information about TRPs corresponding to the n PRS resources is the same, information about resource sets corresponding to the n PRS resources is the same, and resource information of the n PRS resources is the same. The information about the TRP includes an ID or an index of the TRP or a result of performing a modulo operation on the ID of the TRP using a quantity of TRPs on a PRS frequency layer, the information about the resource set includes an ID or an index of the resource set or a result of performing a modulo operation on the ID of the resource set using a quantity of resource sets, and the resource information includes IDs or indexes of the PRS resources.

Optionally, the configuration information further includes quantities of transmission reception points TRPs on the at least two PRS frequency layers participating in aggregation in each PRS frequency layer combination, and an ID or an index of a start TRP of each PRS frequency layer.

Optionally, the at least one PRS frequency layer combination includes a first PRS frequency layer combination, where the first PRS frequency layer combination includes n PRS frequency layers, and n is a positive integer greater than or equal to 2. The processing unit 520 is specifically configured to determine that n PRS resources respectively corresponding to the n PRS frequency layers have an association relationship, where information about TRPs corresponding to the n PRS resources is the same, information about resource sets corresponding to the n PRS resources is the same, and resource information of the n PRS resources is the same. The information about the TRP includes an ID or an index of the TRP or a difference between the ID or the index of the TRP and the ID or the index of the start TRP, the information about the resource set includes an ID or an index of the resource set or a result of performing a modulo operation on the ID of the resource set using a quantity of resource sets, and the resource information includes IDs or indexes of the PRS resources.

Optionally, the configuration information further includes a PRS configuration table. The PRS configuration table includes one or more of the following lists: a list of TRPs participating in aggregation on each PRS frequency layer in each PRS frequency layer combination, a list of resource sets participating in aggregation under each TRP, and a list of PRS resources participating in aggregation in each resource set.

Optionally, the at least one PRS frequency layer combination includes a first PRS frequency layer combination, where the first PRS frequency layer combination includes n PRS frequency layers, and n is a positive integer greater than or equal to 2. The processing unit 520 is specifically configured to determine that n PRS resources respectively corresponding to the n PRS frequency layers have an association relationship, where indexes of TRPs corresponding to the n PRS resources are the same, indexes of resource sets corresponding to the n PRS resources are the same, and indexes of the n PRS resources are the same.

Optionally, each PRS frequency layer combination meets the following conditions: the at least two PRS frequency layers included in each PRS frequency layer combination have a same quantity of TRPs, a same TRP on each PRS frequency layer has a same quantity of resource sets, and each resource set has a same quantity of PRS resources.

Optionally, the processing unit 520 is specifically configured to perform aggregated measurement on the PRS resources having the association relationship in each PRS frequency layer combination, to obtain a measurement result corresponding to each PRS frequency layer combination.

Optionally, the measurement result reported by the terminal device to the location management device includes the measurement result corresponding to each PRS frequency layer combination, and the measurement result corresponding to each PRS frequency layer combination further includes an ID or an index of the PRS frequency layer combination corresponding to each measurement result.

Optionally, measurement time of the measurement result reported by the terminal device to the location management device is a sum of time for the terminal device to measure the PRS resources having the association relationship in each PRS frequency layer combination and time for the terminal device to measure a PRS resource having no association relationship on a single PRS frequency layer.

It should be understood that the processing unit 520 and the transceiver unit 510 may further separately perform any other step, operation, and/or function implemented by the terminal device in the method shown in FIG. 4. A specific process of performing the foregoing corresponding step by each unit is described in detail in the foregoing method embodiment. For brevity, details are not described herein again.

In another possible implementation, the apparatus 500 may be the location management device in the method shown in FIG. 4, or may be a chip configured to implement a function of the location management device in the method shown in FIG. 4. Specifically, the apparatus 500 may implement a procedure performed by the location management device in the method shown in FIG. 4. The transceiver unit 510 and the processing unit 520 are configured to perform processing-related operations of the location management device in the foregoing method procedure.

The transceiver unit 510 is configured to send configuration information to a terminal device, and receive a measurement result sent by the terminal device, where the configuration information includes information about at least one PRS frequency layer combination, each PRS frequency layer combination includes at least two PRS frequency layers participating in aggregation, and the measurement result is a result of measuring, by the terminal device, PRS resources having an association relationship in the at least one PRS frequency layer combination.

Optionally, the configuration information includes identifications ID or indexes indexes of the at least two PRS frequency layers participating in aggregation in each PRS frequency layer combination.

Optionally, the configuration information further includes quantities of transmission reception points TRPs on the at least two PRS frequency layers participating in aggregation in each PRS frequency layer combination, and an ID or an index of a start TRP of each PRS frequency layer.

Optionally, the configuration information further includes a PRS configuration table. The PRS configuration table includes one or more of the following lists: a list of TRPs participating in aggregation on each PRS frequency layer in each PRS frequency layer combination, a list of resource sets participating in aggregation under each TRP, and a list of PRS resources participating in aggregation in each resource set.

Optionally, the measurement result includes a measurement result corresponding to each PRS frequency layer combination, and the measurement result corresponding to each PRS frequency layer combination further includes an ID or an index of the PRS frequency layer combination corresponding to each measurement result.

Optionally, each PRS frequency layer combination meets the following conditions: the at least two PRS frequency layers included in each PRS frequency layer combination have a same quantity of TRPs, a same TRP on each PRS frequency layer has a same quantity of resource sets, and each resource set has a same quantity of PRS resources.

It should be understood that the processing unit 520 and the transceiver unit 510 may further separately perform any other step, operation, and/or function implemented by the location management device in the method shown in FIG. 4. A specific process of performing the foregoing corresponding step by each unit is described in detail in the foregoing method embodiment. For brevity, details are not described herein again.

It should be further understood that in any one of the foregoing implementations, the transceiver unit 510 may include a receiving unit and a sending unit. The receiving unit is configured to perform a receiving function in the transceiver unit 510, and the sending unit is configured to perform a sending function in the transceiver unit 510.

The apparatus 500 has a function of implementing corresponding steps performed by the terminal device in the method shown in FIG. 4, or the apparatus 500 has a function of implementing corresponding steps performed by the location management device in the method shown in FIG. 4. The function may be implemented by hardware, or may be implemented by hardware executing corresponding software. The hardware or the software includes one or more modules corresponding to the foregoing function. For example, the transceiver unit may be replaced by a transceiver (for example, a sending unit in the transceiver unit may be replaced by a transmitter machine, and a receiving unit in the transceiver unit may be replaced by a receiver machine), and another unit, for example, the processing unit, may be replaced by a processor, to separately perform reception-transmission operations and a related processing operation in the method embodiment.

It should be understood that the apparatus 500 herein is embodied in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 500 may be specifically the terminal device in the foregoing embodiments or a chip used in the terminal device, and may be configured to perform a procedure corresponding to the terminal device in the foregoing method embodiment; or the apparatus 500 may be specifically the location management device in the foregoing embodiments or a chip used in the location management device, and may be configured to perform a procedure corresponding to the location management device in the foregoing method embodiment. To avoid repetition, details are not described herein again.

In addition, the transceiver unit may alternatively be a transceiver circuit (for example, may include a receiving circuit and a sending circuit), and the processing unit may be a processing circuit. In embodiments of this application, the apparatus 500 may be the terminal device or the location management device in the foregoing embodiments, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited herein.

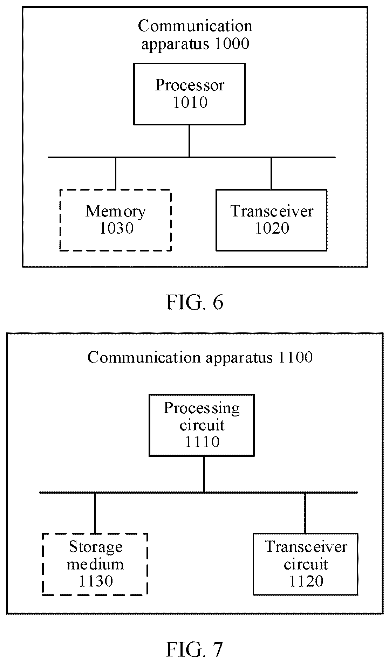

FIG. 6 is a diagram of another structure of a communication apparatus according to an embodiment of this application. As shown in FIG. 6, a communication apparatus 1000 includes at least one processor 1010 and a transceiver 1020. The transceiver 1020 is configured to send a signal and/or receive a signal. The processor 1010 is configured to execute instructions, so that a function of the terminal device in the method shown in FIG. 4 is implemented, or a function of the location management device in the method shown in FIG. 4 is implemented.

Optionally, the communication apparatus 1000 further includes a memory 1030, configured to store the instructions. The processor 1010 is coupled to the memory, and is configured to execute the instructions stored in the memory, to control the transceiver 1020 to send a signal and/or receive a signal.

It should be understood that the processor 1010 and the memory 1030 may be combined into one processing apparatus. The processor 1010 is configured to execute program code stored in the memory 1030, to implement the foregoing functions. During specific implementation, the memory 1030 may alternatively be integrated into the processor 1010, or may be independent of the processor 1010.

It should be further understood that the transceiver 1020 may include a receiver (or referred to as a receiver machine) and a transmitter (or referred to as a transmitter machine). The transceiver 1020 may further include an antenna. A quantity of the antenna may be one or more. The transceiver 1020 may be a communication interface or an interface circuit.

When the communication apparatus 1000 is a chip, the chip includes a transceiver unit and a processing unit. The transceiver unit may be an input/output circuit or a communication interface. The processing unit may be a processor, a microprocessor, or an integrated circuit integrated on the chip.

An embodiment of this application further provides a processing apparatus, including a processor and an interface. The processor may cause the method in the foregoing method embodiment to be implemented.

It should be understood that the processing apparatus may be a chip. For example, the processing apparatus may be a field programmable gate array (field programmable gate array, FPGA), an application-specific integrated chip (application-specific integrated circuit, ASIC), a system on chip (system on chip, SoC), a central processing unit (central processing unit, CPU), a network processor (network processor, NP), a digital signal processing circuit (digital signal processor, DSP), a micro controller (micro controller unit, MCU), a programmable controller (programmable logic device, PLD), or another integrated chip.

In an implementation process, steps in the foregoing methods can be implemented by using a hardware integrated logic circuit in the processor, or by using instructions in a form of software. The steps of the method disclosed with reference to embodiments of this application may be directly performed by a hardware processor, or may be performed by using a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing method in combination with hardware in the processor. To avoid repetition, details are not described herein again.

FIG. 7 is a diagram of another structure of a communication apparatus according to an embodiment of this application. As shown in FIG. 7, an apparatus 1100 includes a processing circuit 1110 and a transceiver circuit 1120. The processing circuit 1110 is configured to execute instructions, so that a function of the terminal device in the method shown in FIG. 4 is implemented, or a function of the location management device in the method shown in FIG. 4 is implemented. The processing circuit 1110 and the transceiver circuit 1120 communicate with each other through an internal connection path, and the processing circuit 1110 may control the transceiver circuit 1120 to send a signal and/or receive a signal.

Optionally, the apparatus 1100 may further include a storage medium 1130. The storage medium 1130 communicates with the processing circuit 1110 and the transceiver circuit 1120 through the internal connection path. The storage medium 1130 is configured to store instructions, and the processing circuit 1110 may execute the instructions stored in the storage medium 1130.

In a possible implementation, the apparatus 1100 is configured to implement a procedure corresponding to the terminal device in the foregoing method embodiment.

In another possible implementation, the apparatus 1100 is configured to implement a procedure corresponding to the location management device in the foregoing method embodiment.

According to the method provided in embodiments of this application, this application further provides a computer program product. The computer program product includes instructions. When the instructions are run by a processor, a function of the terminal device in the method shown in FIG. 4 is implemented, or a function of the location management device in the method shown in FIG. 4 is implemented.

According to the method provided in embodiments of this application, this application further provides a computer-readable storage medium. The computer-readable storage medium includes instructions. When the instructions are run by a processor, a function of the terminal device in the method shown in FIG. 4 is implemented, or a function of the location management device in the method shown in FIG. 4 is implemented.

According to the method provided in embodiments of this application, this application further provides a system. The system includes the foregoing one or more terminal devices and the foregoing one or more location management devices.

All or a part of the foregoing embodiments may be implemented by using software, hardware, firmware, or any combination thereof. When software is used to implement embodiments, all or a part of embodiments may be implemented in a form of a computer program product. The computer program product includes one or more computer instructions. When the computer instructions are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state drive (solid-state drive, SSD)), or the like.

In embodiments of this application, the term such as "example" or "for example" is for representing giving an example, an illustration, or a description. Any embodiment or design scheme described as an "example" in this application should not be explained as being more preferred or having more advantages than another embodiment or design scheme. Exactly, the term "example" is for presenting a concept in a specific manner.

It should be understood that, an "embodiment" mentioned throughout this specification means that particular features, structures, or characteristics related to this embodiment are included in at least one embodiment of this application. Therefore, embodiments in the entire specification do not necessarily refer to a same embodiment. In addition, these particular features, structures, or characteristics may be combined in one or more embodiments by using any appropriate manner.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application. Names of all nodes and messages in this application are merely names set for ease of description in this application, and may be different in an actual network. It should not be understood that names of various nodes and messages are limited in this application. On the contrary, any name that has a function that is the same as or similar to that of the node or the message used in this application is considered as a method or an equivalent replacement in this application, and falls within the protection scope of this application.

It should be further understood that, in this application, "when" and "if" mean that UE or a base station performs corresponding processing in an objective situation, but do not constitute any limitation on time, do not require the UE or the base station to perform a determining action during implementation, and do not mean other limitations either.

It should be noted that, in embodiments of this application, "preset", "preconfigure", or the like may be implemented by pre-storing, in a device (for example, a terminal device), corresponding code, a table, or another manner that can indicate related information. A specific implementation thereof is not limited in this application, for example, a preset rule or a preset constant in embodiments of this application.

In addition, the terms "system" and "network" may be used interchangeably in this specification. The term "and/or" in this specification describes only an association relationship for describing associated objects and represents that three relationships may exist. For example, A and/or B may represent the following three cases: Only A exists, both A and B exist, and only B exists.

The term "at least one of ..." in this specification represents all or any combination of the listed items. For example, "at least one of A, B, and C" or "at least one of A, B, or C" may represent the following six cases: Only A exists, only B exists, only C exists, both A and B exist, both B and C exist, and A, B, and C all exist. In this specification, "at least one" means one or more. "A plurality of" means two or more.

It should be understood that in embodiments of this application, "B corresponding to A" indicates that B is associated with A, and B may be determined based on A. However, it should be further understood that determining B based on A does not mean that B is determined based only on A. B may alternatively be determined based on A and/or other information. The terms "include", "have", and their variants all mean "include but are not limited to", unless otherwise specifically emphasized in another manner.

It should be understood that, in various embodiments of this application, first, second, and various numbers are merely for differentiation for ease of description, and are not for limiting the scope of embodiments of this application. For example, different information is differentiated.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing systems, apparatuses, and units, refer to a corresponding process in the foregoing method embodiments. Details are not described herein again.

In the several embodiments provided in this application, it should be understood that the disclosed systems, apparatuses, and methods may be implemented in other manners. For example, the described apparatus embodiments are merely examples. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to a conventional technology, or a part of the technical solutions may be implemented in a form of a software product. The computer software product is stored in a storage medium, and includes several instructions for instructing a computer device (which may be a personal computer, a server, a network device, or the like) to perform all or a part of the steps of the method described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A method for performing aggregated measurement on a positioning reference signal PRS, wherein the method comprises:

   receiving, by a terminal device, configuration information sent by a location management device, wherein the configuration information comprises information about at least one PRS frequency layer combination, and each PRS frequency layer combination comprises at least two PRS frequency layers participating in aggregation;
   determining, by the terminal device based on the information about the at least one PRS frequency layer combination, PRS resources having an association relationship in each PRS frequency layer combination;
   performing, by the terminal device, aggregated measurement on the PRS resources having the association relationship, to obtain a measurement result; and
   reporting, by the terminal device, the measurement result to the location management device.

2. The method according to claim 1, wherein the configuration information comprises identifications IDs or indexes indexes of the at least two PRS frequency layers participating in aggregation in each PRS frequency layer combination.

3. The method according to claim 1 or 2, wherein the at least one PRS frequency layer combination comprises a first PRS frequency layer combination, the first PRS frequency layer combination comprises n PRS frequency layers, and n is a positive integer greater than or equal to 2; and
   determining, by the terminal device based on the information about the at least one PRS frequency layer combination, the PRS resources having the association relationship in each PRS frequency layer combination comprises:
   determining, by the terminal device, that n PRS resources respectively corresponding to the n PRS frequency layers have an association relationship, wherein information about TRPs corresponding to the n PRS resources is the same, information about resource sets corresponding to the n PRS resources is the same, and resource information of the n PRS resources is the same, wherein the information about the TRP comprises an ID or an index of the TRP or a result of performing a modulo operation on the ID of the TRP using a quantity of TRPs on a PRS frequency layer, the information about the resource set comprises an ID or an index of the resource set or a result of performing a modulo operation on the ID of the resource set using a quantity of resource sets, and the resource information comprises IDs or indexes of the PRS resources.

4. The method according to claim 1 or 2, wherein the configuration information further comprises quantities of transmission reception points TRPs on the at least two PRS frequency layers participating in aggregation in each PRS frequency layer combination, and an ID or an index of a start TRP of each PRS frequency layer.

5. The method according to claim 4, wherein the at least one PRS frequency layer combination comprises a first PRS frequency layer combination, the first PRS frequency layer combination comprises n PRS frequency layers, and n is a positive integer greater than or equal to 2; and
determining, by the terminal device based on the information about the at least one PRS frequency layer combination, the PRS resources having the association relationship in each PRS frequency layer combination comprises:
determining, by the terminal device, that n PRS resources respectively corresponding to the n PRS frequency layers have an association relationship, wherein information about TRPs corresponding to the n PRS resources is the same, information about resource sets corresponding to the n PRS resources is the same, and resource information of the n PRS resources is the same, wherein the information about the TRP comprises an ID or an index of the TRP or a difference between the ID or the index of the TRP and the ID or the index of the start TRP, the information about the resource set comprises an ID or an index of the resource set or a result of performing a modulo operation on the ID of the resource set using a quantity of resource sets, and the resource information comprises IDs or indexes of the PRS resources.

6. The method according to claim 1 or 2, wherein the configuration information further comprises a PRS configuration table, and the PRS configuration table comprises one or more of the following lists: a list of TRPs participating in aggregation on each PRS frequency layer in each PRS frequency layer combination, a list of resource sets participating in aggregation under each TRP, and a list of PRS resources participating in aggregation in each resource set.

7. The method according to claim 6, wherein the at least one PRS frequency layer combination comprises a first PRS frequency layer combination, the first PRS frequency layer combination comprises n PRS frequency layers, and n is a positive integer greater than or equal to 2; and
determining, by the terminal device based on the information about the at least one PRS frequency layer combination, the PRS resources having the association relationship in each PRS frequency layer combination comprises:
determining, by the terminal device, that n PRS resources respectively corresponding to the n PRS frequency layers have an association relationship, wherein indexes of TRPs corresponding to the n PRS resources are the same, indexes of resource sets corresponding to the n PRS resources are the same, and indexes of the n PRS resources are the same.

8. The method according to any one of claims 1 to 7, wherein each PRS frequency layer combination meets the following conditions: the at least two PRS frequency layers comprised in each PRS frequency layer combination have a same quantity of TRPs, a same TRP on each PRS frequency layer has a same quantity of resource sets, and each resource set has a same quantity of PRS resources.

9. The method according to any one of claims 1 to 8, wherein performing, by the terminal device, aggregated measurement on the PRS resources having the association relationship comprises:
performing, by the terminal device, aggregated measurement on the PRS resources having the association relationship in each PRS frequency layer combination, to obtain a measurement result corresponding to each PRS frequency layer combination.

10. The method according to claim 9, wherein the measurement result reported by the terminal device to the location management device comprises the measurement result corresponding to each PRS frequency layer combination, and the measurement result corresponding to each PRS frequency layer combination further comprises an ID or an index of the PRS frequency layer combination corresponding to each measurement result.

11. The method according to claim 9 or 10, wherein measurement time of the measurement result reported by the terminal device to the location management device is a sum of time for the terminal device to measure the PRS resources having the association relationship in each PRS frequency layer combination and time for the terminal device to measure a PRS resource having no association relationship on a single PRS frequency layer.

12. A method for performing aggregated measurement on a positioning reference signal PRS, wherein the method comprises:

sending, by a location management device, configuration information to a terminal device, wherein the configuration information comprises information about at least one PRS frequency layer combination, and each PRS frequency layer combination comprises at least two PRS frequency layers participating in aggregation; and receiving, by the location management device, a measurement result sent by the terminal device, wherein the measurement result is a result of measuring, by the terminal device, PRS resources having an association relationship in the at least one PRS frequency layer combination.

13. The method according to claim 12, wherein the configuration information comprises identifications IDs or indexes indexes of the at least two PRS frequency layers participating in aggregation in each PRS frequency layer combination.

14. The method according to claim 12 or 13, wherein the configuration information further comprises quantities of transmission reception points TRPs on the at least two PRS frequency layers participating in aggregation in each PRS frequency layer combination, and an ID or an index of a start TRP of each PRS frequency layer.

15. The method according to claim 12 or 13, wherein the configuration information further comprises a PRS configuration table, and the PRS configuration table comprises one or more of the following lists: a list of TRPs participating in aggregation on each PRS frequency layer in each PRS frequency layer combination, a list of resource sets participating in aggregation under each TRP, and a list of PRS resources participating in aggregation in each resource set.

16. The method according to any one of claims 12 to 15, wherein the measurement result comprises a measurement result corresponding to each PRS frequency layer combination, and the measurement result corresponding to each PRS frequency layer combination further comprises an ID or an index of the PRS frequency layer combination corresponding to each measurement result.

17. The method according to any one of claims 12 to 16, wherein each PRS frequency layer combination meets the following conditions: the at least two PRS frequency layers comprised in each PRS frequency layer combination have a same quantity of TRPs, a same TRP on each PRS frequency layer has a same quantity of resource sets, and each resource set has a same quantity of PRS resources.

18. A communication apparatus, comprising a unit or a module configured to perform the method according to any one of claims 1 to 11.

19. A communication apparatus, comprising a unit or a module configured to perform the method according to any one of claims 12 to 17.

20. A communication system, comprising the communication apparatus according to claim 18 and/or the communication apparatus according to claim 19.

21. A communication apparatus, wherein the communication apparatus comprises a processor and a storage medium, wherein the storage medium stores instructions, and when the instructions are run by the processor, the method according to any one of claims 1 to 11 is implemented.

22. A communication apparatus, wherein the communication apparatus comprises a processor and a storage medium, wherein the storage medium stores instructions, and when the instructions are run by the processor, the method according to any one of claims 12 to 17 is implemented.

23. A computer-readable storage medium, wherein the computer-readable storage medium comprises instructions, and when the instructions are run by a processor, the method according to any one of claims 1 to 11 is implemented, or the method according to any one of claims 12 to 17 is implemented.

24. A computer program product, wherein the computer program product comprises instructions, and when the instructions are run by a processor, the method according to any one of claims 1 to 11 is implemented, or the method according to any one of claims 12 to 17 is implemented.

25. A chip, comprising one or more processing circuits, wherein the one or more processing circuits are configured to implement the method according to any one of claims 1 to 11 or implement the method according to any one of claims 12 to 17.

FIG. 1

FIG. 2

FIG. 3

A terminal device receives configuration information sent by a location management device, where the configuration information indicates at least two PRS frequency layers participating in aggregation ~ S410

The terminal device determines, based on information about at least one PRS frequency layer combination, PRS resources having an association relationship in each PRS frequency layer combination ~ S420

The terminal device performs aggregated measurement on the PRS resources having the association relationship, to obtain a measurement result ~ S430

The terminal device sends the measurement result to the location management device ~ S440

FIG. 4

Communication apparatus 500

Transceiver unit 510

Processing unit 520

FIG. 5

Communication
apparatus 1000

Processor
1010

Memory
1030

Transceiver
1020

FIG. 6

Communication apparatus 1100

Processing
circuit
1110

Storage
medium
1130

Transceiver
circuit
1120

FIG. 7

## INTERNATIONAL SEARCH REPORT

| International application No. |
|---|
| **PCT/CN2024/070126** |

| A. | CLASSIFICATION OF SUBJECT MATTER |
|---|---|

H04W24/02(2009.01)i

According to International Patent Classification (IPC) or to both national classification and IPC

| B. | FIELDS SEARCHED |
|---|---|

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNABS; CNTXT; CNKI; VEN; WOTXT; USTXT; EPTXT; 3GPP: 聚合, 聚集, 关联, 定位参考信号, 测量, 频点, 配置, aggregate, associate, PRS, measure, frequency point, configuration

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 114286330 A (HUAWEI TECHNOLOGIES CO., LTD.) 05 April 2022 (2022-04-05) description, paragraphs [0004]-[0328] | 1-25 |
| X | CN 114830755 A (QUALCOMM INC.) 29 July 2022 (2022-07-29) description, paragraphs [0011]-[0274] | 1-25 |
| A | CN 115412929 A (HUAWEI TECHNOLOGIES CO., LTD.) 29 November 2022 (2022-11-29) entire document | 1-25 |
| A | US 2022361160 A1 (QUALCOMM INC.) 10 November 2022 (2022-11-10) entire document | 1-25 |

☐ Further documents are listed in the continuation of Box C.   ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **15 March 2024** | **21 March 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/070126**

| Patent document cited in search report | | | Publication date (day/month/year) | Patent family member(s) | | | Publication date (day/month/year) |
|---|---|---|---|---|---|---|---|
| CN | 114286330 | A | 05 April 2022 | WO | 2022063258 | A1 | 31 March 2022 |
| CN | 114830755 | A | 29 July 2022 | TW | 202131709 | A | 16 August 2021 |
| | | | | WO | 2021126502 | A1 | 24 June 2021 |
| | | | | KR | 20220111683 | A | 09 August 2022 |
| | | | | EP | 4079059 | A1 | 26 October 2022 |
| | | | | JP | 2023506040 | A | 14 February 2023 |
| | | | | BR | 112022011296 | A2 | 06 September 2022 |
| | | | | US | 2021185632 | A1 | 17 June 2021 |
| | | | | US | 11496988 | B2 | 08 November 2022 |
| CN | 115412929 | A | 29 November 2022 | WO | 2022237560 | A1 | 17 November 2022 |
| US | 2022361160 | A1 | 10 November 2022 | US | 11770813 | B2 | 26 September 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310151960